# EUROPÄISCHE PATENTSCHRIFT

(11) **EP 2 475 711 B1**
(45) Veröffentlichungstag und Bekanntmachung des Hinweises auf die Patenterteilung: **30.04.2014**
(21) Anmeldenummer: 10752336.7
(22) Anmeldetag: 06.09.2010
(51) Int. Cl.: C08J 9/12

(54) **SAN-EXTRUSIONSSCHAUMSTOFFE**
SAN EXTRUDED FOAMS
MOUSSES EXTRUDÉES SAN

(30) Priorität: 07.09.2009 EP 09169563
(43) Veröffentlichungstag der Anmeldung: 18.07.2012
(73) Patentinhaber: BASF SE, 67056 Ludwigshafen (DE)
(72) Erfinder: HAHN, Klaus, 67281 Kirchheim (DE); RUCKDÄSCHEL, Holger, 67487 St. Martin (DE); BELLIN, Ingo, 68159 Mannheim (DE); MERKEL, Peter, 67308 Zellertal (DE); HARTENSTEIN, Markus, 76774 Leimersheim (DE)
(86) Internationale Anmeldenummer: PCT/EP2010/063049
(87) Internationale Veröffentlichungsnummer: WO 2011/026979

(56) Entgegenhaltungen:
- EP-A1- 1 479 717
- WO-A1-2009/099482
- DE-A1- 19 637 366

## Beschreibung

Die Erfindung betrifft Extrusionsschaumstoffe, erhältlich durch Erhitzen eines Styrol-Acrylnitril-Copolymerisats (SAN) zur Ausbildung einer Polymerschmelze, Einbringen einer Treibmittelkomponente in die Polymerschmelze, gegebenenfalls Zugabe von Hilfs- und Zusatzstoffen und Aufschäumen der Polymerschmelze. Weiter betrifft die Erfindung ein Verfahren zur Herstellung der Extrusionsschaumstoffe sowie die Verwendung der Extrusionsschaumstoffe als Isoliermaterial und als Strukturschaum.

Extrusionsschaumstoffe auf Polystyrolbasis werden in großem Maß in der Bauindustrie zum Isolieren von Gebäudeteilen wie Fundamenten, Wänden, Böden und Dächern eingesetzt. Für diese Anwendung werden Extrusionsschaumstoffe benötigt, die eine möglichst geringe Wärmeleitfähigkeit und damit eine große Isolationsfähigkeit besitzen. Um gute Isolationseigenschaften zu erreichen, werden bevorzugt geschlossenzellige Extrusionsschaumstoffe eingesetzt, da diese im Vergleich zu offenzelligen Extrusionsschaumstoffen eine deutlich bessere Isolationsfähigkeit aufweisen.

Für den Einsatz von Extrusionsschaumstoffen in der Bauindustrie wird von diesen neben guten Isolationseigenschaften auch eine gute Wärmeformbeständigkeit bei geringer Dichte erwartet. Vor allem für Anwendungen, bei denen die Schaumstoffe hohen Temperaturen ausgesetzt sind, ist die Wärmeformbeständigkeit sehr wichtig, da es sonst zu Verformungen der Extrusionsschaumstoffe und somit zu einer Beschädigung der Isolierung kommen kann. Bauteile, bei denen eine gute Wärmeformbeständigkeit eine besondere Rolle spielt, sind beispielsweise Dachisolierungen und Wandisolierungen, die direkter Sonneneinstrahlung ausgesetzt sind.

Neben guten Isolationseigenschaften und guter Wärmeformbeständigkeit sollten Extrusionsschaumstoffe auch eine gute Beständigkeit gegenüber Lösungsmitteln, vor allem gegenüber Öl und Mineralöl, aufweisen. Dies ist insbesondere für Bauteile erforderlich, die im unteren Wand-, im Fundament- und im Bodenbereich eingesetzt werden. Die DE 10 2004 057 602 A1 beschreibt Extrusionsschaumstoffplatten auf Basis von Styrolpolymerisaten, die eine verminderte Wärmeleitfähigkeit aufweisen. Als Polystyrolpolymerisate werden neben Polystyrol auch Mischpolymerisate offenbart, die neben mindestens 50 Gew.-% einpolymerisiertem Styrol weitere Comonomere aus der Gruppe α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, Maleinsäureanhydrid und geringe Mengen an Verbindungen mit zwei polymerisierbaren Doppelbindungen enthalten können. Als Treibmittel wird bevorzugt ein Treibmittelgemisch aus 95 bis 20 Gew.-% Kohlendioxid, 5 bis 80 Gew.-% Wasser und 0 bis 75 Gew.-% eines Alkohols, Ketons oder Esters eingesetzt. In dem einzigen Beispiel der DE 10 2004 057 602 wird reines Polystyrol mit einem 1:1-Gemisch von Kohlendioxid und Ethanol extrudiert. Die Schaumstoffplatten nach der Lehre der DE 10 2004 057 602 zeigen gute Isolationseigenschaften. In Bezug auf die Wärmeformbeständigkeit und die Lösungsmittelbeständigkeit besteht jedoch noch Verbesserungspotenzial.

Die DE-A 103 21 787 offenbart ein Verfahren zur Herstellung von Schaumstoffplatten auf Basis von Styrol-Acrylnitril-Copolymeren, die eine verbesserte Lösungsmittelbeständigkeit aufweisen. Als Treibmittel oder Treibmittelkomponente wird Wasser eingesetzt. Die nach diesem Verfahren erhältlichen Schaumstoffplatten weisen eine gute Lösungsmittelbeständigkeit auf. Im Hinblick auf die Wärmeformbeständigkeit und die Isolationseigenschaften besteht jedoch noch Verbesserungspotenzial.

Die Aufgabe der Erfindung liegt demnach darin, Extrusionsschaumstoffe bereitzustellen, die gute Isolationseigenschaften und gute Lösungsmittel- und Wärmeformbeständigkeit aufweisen. Darüber hinaus sollen die Extrusionsschaumstoffe eine homogene Zellstruktur aufweisen und ohne den Einsatz umweltschädlicher Treibmittel wie FCKW oder leicht brennbarer Treibmittel wie Alkane zugänglich sein.

Gelöst wird die Aufgabe durch einen geschlossenzelligen Extrusionsschaumstoff mit einer Dichte im Bereich von 20 bis 150 g/l und einer Zellzahl im Bereich von 1 bis 30 Zellen pro mm, erhältlich durch
(a) Erhitzen einer Polymerkomponente (P), die gebildet ist aus
   P1) 80 bis 100 Gew.-% (bezogen auf P) von einem oder mehreren Styrol-Acrylnitril-Copolymeren (SAN), enthaltend
      a1) 18 bis 40 Gew.-% (bezogen auf SAN) einpolymerisiertes Acrylnitril,
      a2) 60 bis 82 Gew.-% (bezogen auf SAN) einpolymerisiertes Styrol, und
      a3) 0 bis 22 Gew.-% (bezogen auf SAN) mindestens eines einpolymerisierten Monomers aus der Gruppe bestehend aus Alkyl-(meth)acrylaten, (Meth)acrylsäure, Maleinsäureanhydrid und Maleinimiden,
   P2) 0 bis 20 Gew.-% (bezogen auf P) von einem oder mehreren thermoplastischen Polymeren aus der Gruppe bestehend aus Styrolcopolymeren, Polyolefinen, Polyacrylaten, Polycarbonaten (PC), Polyestern, Polyamiden, Polyethersulfonen (PES), Polyetherketonen (PEK) und Polyethersulfiden, zur Ausbildung einer Polymerschmelze,
(b) Einbringen von 1 bis 12 Gew.-% (bezogen auf P) einer Treibmittelkomponente (T), die weniger als 0,2 Gew.-% Wasser (bezogen auf P) enthält, enthaltend
   b1) 15 bis 95 Gew.-% (bezogen auf T) Kohlendioxid und
   b2) 5 bis 85 Gew.-% (bezogen auf T) eines oder mehrerer Co-Treibmittel ausgewählt aus der Gruppe bestehend aus C₁-C₄ Alkoholen und C₁-C₄ Carbonylverbindungen,
   in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum,
(d) gegebenenfalls Zugabe von Additiven zu der Polymerkomponente (P) oder in mindestens einem der Schritte a), b) und/oder c).

Weiterhin Gegenstand der Erfindung ist das beschriebene Verfahren zur Herstellung der erfindungsgemäßen Extrusionsschaumstoffe sowie die Verwendung dieses Schaumstoffs als Isoliermaterial und als Strukturschaum.

Der erfindungsgemäße Extrusionsschaumstoff weist gute Isolationseigenschaften, gute Lösungsmittel- und gute Wärmeformbeständigkeit auf. Er vereint damit drei wichtige Eigenschaften in einem Werkstoff und ermöglicht somit den universellen Einsatz dieses Werkstoffs in den unterschiedlichsten Anwendungen, bei denen bisher der Einsatz verschiedener und für den jeweiligen Einsatz speziell angepasster Werkstoffe notwendig war. Der erfindungsgemäße Extrusionsschaumstoff ist ohne den Einsatz von Treibmitteln, die aus Umweltgesichtspunkten oder in Bezug auf die Brandschutzbestimmungen problematisch sind, zugänglich. Darüber hinaus bietet er trotz niedriger Dichte im Vergleich zu den Extrusionsschaumstoffen aus dem Stand der Technik gute Isolations- und mechanische Eigenschaften bei gleichzeitig hoher Lösungsmittel- und Wärmeformbeständigkeit.

Geschlossenzelliger Extrusionsschaumstoff bedeutet im Sinne der Erfindung, dass die Zellen gemessen nach DIN ISO 4590 zu mindestens 90 % geschlossen sind.

Die erfindungsgemäß als Polymerkomponente (P) eingesetzten SAN (P1) und die thermoplastischen Polymere (P2) können nach dem Fachmann bekannten Verfahren, beispielsweise durch radikalische, anionische oder kationische Polymerisation in Substanz, Lösung, Dispersion oder Emulsion hergestellt werden. Bevorzugt ist die Herstellung durch radikalische Polymerisation.

Das SAN enthält im Allgemeinen 18 bis 40 Gew.-%, bevorzugt 25 bis 35 Gew.-% und insbesondere 30 bis 35 Gew.-% einpolymerisiertes Acrylnitril und im Allgemeinen 60 bis 82 Gew.-%, bevorzugt 65 bis 75 Gew.-% und insbesondere bevorzugt 65 bis 70 Gew.-% einpolymerisiertes Styrol (jeweils bezogen auf SAN).

Bevorzugt besteht das SAN aus den Komponenten a1) und a2) sowie gegebenenfalls a3).

Das SAN kann gegebenenfalls 0 bis 22 Gew.-% (bezogen auf P) mindestens eines einpolymerisierten Monomers aus der Gruppe bestehend aus Alkyl-(meth)acrylaten, (Meth)acrylsäure, Maleinsäureanhydrid und Maleinimiden (Komponente a3)) enthalten.

Unter Alkyl(meth)acrylaten sind im Rahmen der Erfindung sowohl Alkylacrylate, als auch Alklymethacrylate zu verstehen. Unter (Meth)acrylsäure sind sowohl Acrylsäure, als auch Methacrylsäure zu verstehen.

Bevorzugte Alkyl(meth)acrylate werden gebildet aus (Meth)acrylsäure und C₁-C₆-Alkoholen wie Methanol, Ethanol, 1-Propanol, 2-Propanol, n-Butanol, sec.-Butanol, isoButanol, tert.-Butanol, Pentanol und seinen Derivaten, Hexanol und seinen Derivaten und Cyclohexanol.

Bevorzugte Maleinimide sind Maleinimid selbst, N-Alkyl-substituierte Maleinimide und N-Phenyl-substituierte Maleinimide.

In einer bevorzugten Ausführungsform enthält das SAN kein Monomer der Komponente a3), so dass das SAN als Monomerkomponenten ausschließlich aus Acrylnitril und Styrol besteht.

Die im erfindungsgemäßen Verfahren einsetzbaren SAN (P1) weisen im Allgemeinen eine Schmelzvolumenrate MVR (220 °C/ 10 kg) nach ISO 113 im Bereich von 5 bis 20 cm³ / 10 min auf.

Geeignete SAN-Typen (SAN; Komponente P1) sind beispielsweise Polymere der BASF SE wie Luran 3380, Luran 33100 und Luran 2580.

In einer bevorzugten Ausführungsform enthält der erfindungsgemäße Extrusionsschaumstoff ein (1) Styrol-Acrylnitril-Copolymer.

In einer weiteren bevorzugten Ausführungsform enthält der erfindungsgemäße Extrusionsschaumstoff zwei bis vier, vorzugsweise zwei, Styrol-Acrylnitril-Copolymere.

Als thermoplastische Polymere (P2) der Polymerkomponente (P) können ein oder mehrere thermoplastischen Polymeren aus der Gruppe bestehend aus Styrolcopolymeren, Polyolefinen, Polyacrylaten, Polycarbonaten (PC), Polyestern, Polyamiden, Polyethersulfonen (PES), Polyetherketonen (PEK) und Polyethersulfiden (PES) eingesetzt werden.

Geeignete Styrolcopolymere (als Komponente P2) sind beispielsweise Acrylnitril-Butadien-Styrol (ABS), Styrol-Maleinsäureanhyrid (SMA), Acrynitril-Styrol-Acrylester (ASA) und Styrol-Methacrylsäure.

Als Komponente (P2) kann auch Polystyrol eingesetzt werden. Dies ist jedoch nicht bevorzugt.

Geeignete Polyolefinen (als Komponente P2) sind beispielsweise Polypropylen (PP) Polyethylen (PE) und Polybutadien.

Ein geeignetes Polyacrylate (als Komponente P2) ist beispielsweise Polymethylmethacrylat (PMMA).

Geeignete Polyester (als Komponente P2) sind beispielsweise Polyethylenterephthalat (PET) und Polybutylenterephthalat (PBT).

Geeignete Polyamide (als Komponente P2) sind beispielsweise Polyamid 6 (PA6), Polyamid 6,6, Polyamid 6,l und Polyamid 6/6,6.

In einer bevorzugten Ausführungsform enthält die Polymerkomponente (P) kein (0 Gew.-%) Styrolcopolymer (als Komponente P2).

In einer weiteren bevorzugten Ausführungsform enthält die Polymerkomponente (P) kein (0 Gew.-%) thermoplastisches Polymer (P2).

In einer weiteren bevorzugten Ausführungsform enthält die Polymerkomponente (P) (und somit auch der Extrusionsschaumstoff) 0 bis 15 Gew.-%, besonders bevorzugt 0 bis 5 Gew.-%, insbesondere bevorzugt 0 Gew.-% des Polymers (P2) (jeweils bezogen auf P)

In einer weiteren bevorzugten Ausführungsform enthält die Polymerkomponente (P) (und somit auch der Extrusionsschaumstoff) 0,1 bis 20 Gew.-%, besonders bevorzugt 0,5 bis 10 Gew.-%, insbesondere bevorzugt 1 bis 5 Gew.-% des Polymers (P2) (jeweils bezogen auf P)

In einer weiteren bevorzugten Ausführungsform enthält die Polymerkomponente (P) als Monomere ausschließlich Acrylnitril und Styrol (0 Gew.-% a3) und 0 Gew.-% P2).

In einer Ausführungsform weist der Extrusionsschaum eine Dichte im Bereich von 50 bis 130 g/l, bevorzugt 60 bis 120 g/l auf.

In einer weiteren Ausführungsform weist der Extrusionsschaum eine Dichte im Bereich von 20 bis 60 g/l, bevorzugt 20 bis 50 g/l und insbesondere bevorzugt im Bereich von 25 bis 45 g/l auf.

Weiterhin Gegenstand der Erfindung ist ein Verfahren zur Herstellung eines geschlossenzelligen Extrusionsschaumstoffs mit einer Dichte im Bereich von 20 bis 150 g/l, einer Zellzahl im Bereich von 1 bis 30 Zellen pro mm durch
(a) Erhitzen einer Polymerkomponente (P), die gebildet ist aus
   P1) 80 bis 100 Gew.-% (bezogen auf P) von einem oder mehreren Styrol-Acrylnitril-Copolymeren (SAN), enthaltend
      a1) 18 bis 40 Gew.-% (bezogen auf SAN) einpolymerisiertes Acrylnitril,
      a2) 60 bis 82 Gew.-% (bezogen auf SAN) einpolymerisiertes Styrol, und
      a3) 0 bis 22 Gew.-% (bezogen auf SAN) mindestens eines einpolymerisierten Monomers aus der Gruppe bestehend aus Alkyl-(meth)acrylaten, (Meth)acrylsäure, Maleinsäureanhydrid und Maleinimiden,
   P2) 0 bis 20 Gew.-% (bezogen auf P) von einem oder mehreren thermoplastischen Polymeren aus der Gruppe bestehend aus Styrolcopolymeren, Polyolefinen, Polyacrylaten, Polycarbonaten (PC), Polyestern, Polyamiden, Polyethersulfonen (PES), Polyetherketonen (PEK) und Polyethersulfiden,
   zur Ausbildung einer Polymerschmelze,
(b) Einbringen von 1 bis 12 Gew.-% (bezogen auf P) einer Treibmittelkomponente T, die weniger als 0,2 Gew.-% Wasser (bezogen auf P) enthält, enthaltend
   b1) 15 bis 95 Gew.-% (bezogen auf T) Kohlendioxid und
   b2) 5 bis 85 Gew.-% (bezogen auf T) eines oder mehrerer Co-Treibmittel ausgewählt aus der Gruppe bestehend aus C₁-C₄ Alkoholen und C₁-C₄ Carbonylverbindungen,
   in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum,
(d) gegebenenfalls Zugabe von Additiven zu der Polymerkomponente (P) in mindestens einem der Schritte a), b) und/oder c).

In Schritt (a) des Verfahrens wird die Polymerkomponente (P) erhitzt, um eine Polymerschmelze zu erhalten. Unter Ausbildung einer Polymerschmelze wird im Rahmen der Erfindung eine Plastifizierung der Polymerkomponente (P) im weiteren Sinne verstanden, d.h. die Überführung der festen Bestandteile der Polymerkomponente (P) in einen verformbaren oder fließfähigen Zustand. Dazu ist es notwendig, dass die Polymerkomponente (P) auf eine Temperatur oberhalb der Schmelz- bzw. Glasübergangstemperatur erhitzt wird. Geeignete Temperaturen betragen im Allgemeinen mindestens 150 °C, bevorzugt 160 bis 280 °C, besonders bevorzugt 180 bis 240 °C.

Das Erhitzen der Polymerkomponente (P) (Schritt (a) des erfindungsgemäßen Verfahrens) kann mittels beliebiger Einrichtungen, die auf dem Fachgebiet bekannt sind, wie mittels eines Extruders, eines Mischers (z.B. eines Kneters) erfolgen. Bevorzugt ist der Einsatz von Aufschmelzextrudern (Primärextrudern). Schritt (a) des erfindungsgemäßen Verfahrens kann kontinuierlich oder diskontinuierlich durchgeführt werden, wobei eine kontinuierliche Fahrweise bevorzugt ist.

Schritt (b) des erfindungsgemäßen Verfahrens umfasst das Einbringen einer Treibmittelkomponente (T) in die in Schritt (a) hergestellte Polymerschmelze zur Ausbildung einer schäumbaren Schmelze.

Die Treibmittelkomponente (T) umfasst (und besteht vorzugsweise aus)
(b1) 95-15 Gew.-%, bevorzugt 85 - 15 Gew.-%, besonders bevorzugt 75 - 15 Gew.-%, (bezogen auf T) CO₂,
(b2) 5 - 85 Gew.-%, bevorzugt 15 - 85 Gew.-%, besonders bevorzugt 25 - 85 Gew.-%, (bezogen auf T) an einem oder mehreren, vorzugsweise einem oder zwei, insbesondere einem, Co-Treibmittel aus der Gruppe der C₁-C₄-Alkohole, und C₁-C₄-Carbonylverbindungen, bevorzugt C₂-C₄-Carbonylverbindungen, insbesondere C₃-C₄-Ketone und Formiate, sowie
(b3) weniger als 0,2 Gew.-% Wasser, bevorzugt 0 bis 0,18 Gew.-%, mehr bevorzugt 0 bis 0,14 Gew.-%, besonders bevorzugt 0 bis 0,1 Gew.-%, insbesondere bevorzugt 0 bis 0,08 und am meisten bevorzugt 0 bis 0,05 Gew.-% Wasser (jeweils bezogen auf P).

Bevorzugt werden als Treibmittelkomponente (T) Gemische aus zwei oder mehr Treibmitteln eingesetzt. Besonders bevorzugt sind binäre und ternäre Gemische.

Bevorzugte Alkohole sind Methanol, Ethanol, 1-Propanol, 2-Propanol, 1-Butanol, 2-Butanol, 2-Methylpropanol und tert.-Butanol. Besonders bevorzugt sind 2-Propanol und Ethanol. Insbesondere bevorzugt ist Ethanol.

C₁-C₄-Carbonylverbindungen sind Ketone, Aldehyde, Carbonsäureester sowie Carbonsäureamide mit 1 - 4 Kohlenstoffatomen.

Geeignete Ketone sind Aceton und Methylethylketon, als Formiate bevorzugt sind Methylformiat, Ethylformiat, n-Propylformiat und i-Propylformiat. Bevorzugt sind Methylformiat und Aceton. Insbesondere bevorzugt ist Aceton.

In den Co-Treibmitteln b2) und in dem Kohlendioxid b1) kann Wasser b3) enthalten sein. Wasser gelangt in die Treibmittelkomponente (T) vor allem durch die Verwendung von technischen Alkoholen und Ketonen. Die Wasserkonzentrationen der Treibmittelkomponente (T) liegen innerhalb der vorstehend genannten Konzentrationsbereiche.

In einer bevorzugten Ausführungsform ist die Treibmittelkomponente im Wesentlichen wasserfrei. Besonders bevorzugt sind Mischungen von Kohlendioxid und Ethanol, Kohlendioxid und Aceton, Kohlendioxid und Methylformiat, Kohlendioxid und Mischungen aus Ethanol und Aceton in den oben genannten Mischungsverhältnissen.

Die Treibmittelkomponente (T) wird der Polymerschmelze in einem Anteil von insgesamt 1 bis 12 Gew.-%, bevorzugt 1 bis 8 und insbesondere bevorzugt 1,5 bis 7 Gew.-% (jeweils bezogen auf P) zugesetzt.

In einer bevorzugten Ausführungsform wird die Treibmittelkomponente (T) der Polymerschmelze in einem Anteil von 1 bis 4,5 Gew.-% (bezogen auf P) zugesetzt.

In einer weiteren bevorzugten Ausführungsform wird die Treibmittelkomponente (T) der Polymerschmelze in einem Anteil von 2,5 bis 8 Gew.-% (bezogen auf P) zugesetzt.

Eine geeignete Zusammensetzung der Treibmittelkomponente (T) enthält 15 bis 95 Gew.-% der Komponente b1) und 5 bis 85 Gew.-% der Komponente b2). Bevorzugt beträgt der Anteil der Komponente b1) bezogen auf P weniger als 6 Gew.-% und der Anteil der Komponente b2) bezogen auf P weniger als 5 Gew.-%, und der Gesamtanteil der Komponenten b1) und b2) bezogen auf P weniger als 8 Gew.-%. Besonders bevorzugt beträgt der Anteil der Komponente b1) bezogen auf P weniger als 4.5 Gew.-% und der Anteil der Komponente b2) bezogen auf P weniger als 4 Gew.-%.

In einer besonders bevorzugten Ausführungsform wird die Treibmittelkomponente (T) der Polymerschmelze in einem Anteil von 1 bis 4,5 Gew.-%, bezogen auf P, zugesetzt und die Treibmittelkomponente enthält 15 bis 40 Gew.-% (bezogen auf T) Kohlendioxid (Komponente b1).

In einer weiteren besonders bevorzugten Ausführungsform wird die Treibmittelkomponente (T) der Polymerschmelze in einem Anteil von 1 bis 4,5 Gew.-%, bezogen auf (P), zugesetzt, die Treibmittelkomponente enthält 15 bis 40 Gew.-% (bezogen auf T) Kohlendioxid (Komponente b1) und der Extrusionsschaum weist eine Dichte im Bereich von 50 bis 130 g/l, bevorzugt von 60 bis 120 g/l auf.

In einer weiteren besonders bevorzugten Ausführungsform wird die Treibmittelkomponente (T) der Polymerschmelze in einem Anteil von 2,5 bis 8 Gew.-% (bezogen auf P) zugesetzt und die Treibmittelkomponente enthält 55 bis 75 Gew.-%, (bezogen auf T) Kohlendioxid (Komponente b1).

In einer weiteren besonders bevorzugten Ausführungsform wird die Treibmittelkomponente (T) der Polymerschmelze in einem Anteil von 2,5 bis 8 Gew.-% (bezogen auf P) zugesetzt, die Treibmittelkomponente enthält 55 bis 75 Gew.-%, (bezogen auf T) Kohlendioxid (Komponente b1) und der Extrusionsschaum weist eine Dichte im Bereich von 20 bis 60 g/l, bevorzugt 20 bis 50 g/l und insbesondere bevorzugt 25 bis 45 g/l auf.

Die Treibmittelkomponente (T) kann in eine geschmolzene Polymerkomponente (P) durch jede dem Fachmann bekannte Methode eingebracht werden. Geeignet sind beispielsweise Extruder oder Mischer (z.B. Kneter). In einer bevorzugten Ausführungsform wird das Treibmittel mit der geschmolzenen Polymerkomponente (P) unter erhöhtem Druck gemischt. Der Druck muss dabei so hoch sein, dass im Wesentlichen ein Aufschäumen des geschmolzenen Polymermaterials verhindert und eine homogene Verteilung der Treibmittelkomponente (T) in der geschmolzenen Polymerkomponente (P) erreicht wird. Geeignete Drücke sind 50 bis 500 bar (absolut), bevorzugt 100 bis 300 bar (absolut), besonders bevorzugt 150 bis 250 bar (absolut). Die Temperatur in Schritt (b) des erfindungsgemäßen Verfahrens muss so gewählt sein, dass das polymere Material im geschmolzenen Zustand vorliegt. Dazu ist es notwendig, dass die Polymerkomponente P auf eine Temperatur oberhalb der Schmelz- bzw. Glasübergangstemperatur erhitzt wird. Geeignete Temperaturen betragen im Allgemeinen mindestens 150 °C, bevorzugt 160 bis 280 °C, besonders bevorzugt 180 bis 240 °C.

Die Zugabe des Treibmittels kann im Aufschmelzextruder (Primärextruder) oder in einem nachgelagerten Schritt erfolgen.

In einer bevorzugten Ausführungsform wird die schäumbare Polymerschmelze in dem Fachmann bekannten XPS-Extrudern durchgeführt, beispielsweise über einem Tandem-Aufbau aus Aufschmelzextruder (Primärextruder) und Kühlextruder (Sekundärextruder). Das Verfahren kann kontinuierlich und diskontinuierlich durchgeführt werden, wobei die Polymerkomponente (P) im Primärextruder aufgeschmolzen wird (Schritt (a)) und die Zugabe des Treibmittels (Schritt (b)) zur Ausbildung einer schäumbaren Schmelze ebenfalls im Primärextruder erfolgt.

Danach wird die mit Treibmittel versehene schäumbare Schmelze im Sekundärextruder auf eine für das Schäumen geeignete Temperatur von 50-180 °C, bevorzugt auf eine Temperatur von 80-150 °C, gekühlt.

In einer Ausführungsform werden der Polymerkomponente (P) vor Durchführung des Verfahrens und/oder in mindestens einem der Schritte a), b) und/oder c) Additive, d.h. Hilfs- und/oder Zusatzstoffe, zugegeben. Geeignete Hilfs- und Zusatzstoffe sind dem Fachmann bekannt.

In einer bevorzugten Ausführungsform wird der Polymerkomponente (P) wenigstens ein Nukleierungsmittel zugesetzt. Als Nukleierungsmittel können feinteilige, anorganische Feststoffe wie Talkum, Metalloxide, Silikate oder Polyethylenwachse in Mengen von im Allgemeinen 0,1 bis 10 Gew.-%, bevorzugt 0,1 bis 3 Gew.-%, besonders bevorzugt 1 bis 1,5 Gew.-%, bezogen auf P, eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum, beispielsweise Talkum von der Firma Luzenac Pharma. Das Nukleierungsmittel kann nach dem Fachmann bekannten Methoden zugegeben werden. Die Zugabe kann vor Durchführung des Verfahrens und/oder in Schritt a) und/oder b) und/oder c) erfolgen. Gewünschtenfalls können ein oder mehrere Additive wie Keimbildner, Füllstoffe (beispielsweise mineralische Füllstoffe wie Glasfasern), Weichmacher, Flammschutzmittel, IR-Absorber wie Ruß oder Graphit, Aluminiumpulver und Titandioxid, lösliche und unlösliche Farbstoffe sowie Pigmente zugegeben werden. Bevorzugte Additive sind Graphit und Ruß.

Besonders bevorzugt wird Graphit in Mengen von im Allgemeinen 0,05 bis 25 Gew.-%, insbesondere bevorzugt in Mengen von 2 bis 8 Gew.-%, bezogen auf P zugegeben. Geeignete Teilchengrößen für das eingesetzte Graphit liegen im Bereich von 1 bis 50 µm, bevorzugt im Bereich von 2 bis 10 µm.

Aufgrund der Brandschutzbestimmungen in der Bauindustrie und anderen Branchen werden bevorzugt ein oder mehrere Flammschutzmittel zugegeben. Geeignete Flammschutzmittel sind beispielsweise Tetrabrombisphenol A, bromierte Polystyrol Oligomere, Tetrabrombisphenol-A-diallylether, Blähgraphit, roter Phosphor, Triphenylphosphat und 9,10-Dihydro-9-oxa-10-phosphaphenanthren-10-oxid. Ein weiteres geeignetes Flammschutzmittel ist beispielsweise Hexabromcyclododecan (HBCD), insbesondere die technischen Produkte, welche im Wesentlichen das α-, β- und γ-Isomer und vorzugsweise einen Zusatz von Dicumyl (2,3-Dimethyl-2,3-diphenylbutan) als Synergisten enthalten. Insbesondere bevorzugt sind bromierte aromatische Verbindungen, wie Tetrabrombisphenol A, und bromierte Polystyrol Oligomere.

Bevorzugt zur Wärmedämmung ist insbesondere die Zugabe von Graphit, Ruß, Aluminiumpulver oder eines IR-Farbstoffs (z.B. Indoanilin-Farbstoffe, Oxonol-Farbstoffe oder Anthrachinon-Farbstoffe).

In der Regel werden die Farbstoffe und Pigmente in Mengen im Bereich von 0,01 bis 30, bevorzugt im Bereich von 1 bis 5 Gew.-% zugesetzt (bezogen auf P). Zur homogenen und mikrodispersen Verteilung der Pigmente in der Polymerschmelze kann es insbesondere bei polaren Pigmenten zweckmäßig sein, ein Dispergierhilfsmittel, z.B. Organosilane, epoxygruppenhaltige Polymere oder Maleinsäureanhydrid-gepfropfte Styrolpolymere, einzusetzen. Bevorzugte Weichmacher sind Fettsäureester, Fettsäureamide und Phthalate, die in Mengen von 0,05 bis 10 Gew.-%, bezogen auf die Polymerkomponente (P), eingesetzt werden können.

Die Gesamtmenge an Additiven beträgt im Allgemeinen 0 bis 30 Gew.-%, vorzugsweise 0 bis 20 Gew.-%, bezogen auf das Gesamtgewicht des Extrusionsschaums.

In einer bevorzugten Ausführungsform beträgt die Gesamtmenge an Additiven 0,5 bis 30 Gew.-%, besonders bevorzugt 0,5 bis 20 Gew.-% (bezogen auf das Gesamtgewicht des Extrusionsschaums).

In einer weiteren Ausführungsform enthält der Extrusionsschaum keine Additive.

Schritt (c) des erfindungsgemäßen Verfahrens umfasst das Aufschäumen der schäumbaren Schmelze, um einen Extrusionsschaumstoff zu erhalten.

Die Schmelze wird dazu durch eine geeignete Vorrichtung, beispielsweise eine Düsenplatte, gefördert. Die Düsenplatte wird mindestens auf die Temperatur der treibmittelhaltigen Polymerschmelze beheizt. Bevorzugt liegt die Temperatur der Düsenplatte bei 60 bis 200 °C. Besonders bevorzugt liegt die Temperatur der Düsenplatte bei 110 bis 180°C.

Die treibmittelhaltige Polymerschmelze wird durch die Düsenplatte in einen Bereich überführt, in dem ein niedrigerer Druck herrscht als in demjenigen Bereich, in dem die schäumbare Schmelze vor Extrusion durch die Düsenplatte gehalten wird. Der niedrigere Druck kann überatmosphärisch oder unteratmosphärisch sein. Bevorzugt ist die Extrusion in einen Bereich mit atmosphärischem Druck.

Schritt (c) wird ebenfalls bei einer Temperatur durchgeführt, bei der das zu schäumende polymere Material in geschmolzenem Zustand vorliegt. Im Allgemeinen bei Temperaturen von 50 bis 170 °C, bevorzugt bei 90 bis 150 °C, besonders bevorzugt bei 110 bis 140 °C. Dadurch, dass die treibmittelhaltige Polymerschmelze in Schritt (c) in einen Bereich überführt wird, in dem ein niedrigerer Druck herrscht, wird das Treibmittel in den gasförmigen Zustand überführt. Durch den großen Volumenanstieg wird die Polymerschmelze ausgedehnt und aufgeschäumt.

Die geometrische Form des Querschnitts der nach dem erfindungsgemäßen Verfahren erhältlichen Extrusionsschaumstoffe wird im Wesentlichen durch die Wahl der Düsenplatte und ggf. durch geeignete Nachfolgeeinrichtungen wie Plattenkalibrierungen, Rollenbahnabzüge oder Bandabzüge bestimmt und ist frei wählbar.

Die nach dem erfindungsgemäßen Verfahren erhältlichen Extrusionsschaumstoffe weisen bevorzugt einen rechtwinkligen Querschnitt auf. Die Dicke der Extrusionsschaumstoffe wird dabei durch die Höhe des Düsenplattenschlitzes bestimmt. Die Breite der Extrusionsschaumstoffe wird durch die Breite des Düsenplattenschlitzes bestimmt. Die Länge der Extrusionsschaumstoffteile wird in einem nachgelagerten Arbeitsschritt durch bekannte, dem Fachmann geläufige Verfahren wie Verkleben, Verschweißen, Zersägen und Zerschneiden bestimmt. Insbesondere bevorzugt sind Extrusionsschaumstoffteile mit einer plattenförmigen Geometrie. Plattenförmig bedeutet, dass die Abmessung der Dicke (Höhe) im Vergleich zu der Abmessung der Breite und der Abmessung der Länge des Formteils klein ist.

Die nach dem erfindungsgemäßen Verfahren erhältlichen Extrusionsschaumstoffteile weisen in der Regel eine Druckfestigkeit, gemessen nach DIN EN 826, im Bereich von 0,15 bis 6 N/mm², bevorzugt im Bereich von 0,3 bis 2 N/mm², auf. Bevorzugt liegt die Dichte der Schaumstoffplatten im Bereich von 20 bis 150 g/l. Die erfindungsgemäßen Extrusionsschaumstoffe weisen bevorzugt Zellen auf, die gemessen nach DIN ISO 4590 zu mindestens 90 %, insbesondere zu 95 bis 100 % geschlossenzellig sind.

Der erfindungsgemäße Extrusionsschaumstoff weist eine Zellzahl im Bereich von 1 bis 30 Zellen pro mm, bevorzugt von 3 bis 25 Zellen pro mm und insbesondere bevorzugt von 3 bis 20 Zellen pro mm auf.

Gegenstand der Erfindung ist auch die Verwendung der erfindungsgemäßen Extrusionsschaumstoffe und der daraus erhältlichen Formkörper. Bevorzugt ist die Verwendung als Isoliermaterial insbesondere in der Bauindustrie, unter- und oberirdisch, z.B. für Fundamente, Wände, Böden und Dächer. Bevorzugt ist ebenfalls die Verwendung als Strukturschaum, insbesondere für Leichtbauanwendungen und als Kernmaterial für Verbundanwendungen.

Die Erfindung wird durch die nachfolgenden Beispiele näher erläutert, ohne sie darauf zu beschränken.

### Beispiele

### Verwendete Materialien

| | |
|---|---|
| Luran 3360 | SAN mit einem Acrylnitrilgehalt von 33 Gew.-% und einer Viskositätszahl von 60 ml/g (Handelsprodukt der BASF SE) |
| Luran 3380 | SAN mit einem Acrylnitrilgehalt von 33 Gew.-% und einer Viskositätszahl von 80 ml/g (Handelsprodukt der BASF SE) |
| Luran 33100 | SAN mit einem Acrylnitrilgehalt von 33 Gew.-% und einer Viskositätszahl von 100 ml/g (Handelsprodukt der BASF SE) |
| Luran 2580 | SAN mit einem Acrylnitrilgehalt von 25 Gew.-% und einer Viskositätszahl von 80 ml/g (Handelsprodukt der BASF SE) |
| Talkum | Talkum IT Extra, Luzenac Pharma |

### Allgemeine Arbeitsvorschrift

Die eingesetzten Polymere wurden zusammen mit Talkum kontinuierlich einem Aufschmelzextruder zugeführt. Der Gesamtdurchsatz der Polymere betrug 7 kg/h. Durch eine in dem Aufschmelzextruder eingebrachte Injektionsöffnung wurden kontinuierlich die Treibmittel (CO₂, Ethanol, Aceton und/oder Methylformiat) zugeführt. Die treibmittelhaltige Schmelze wurde in einem nachfolgenden Kühlextruder abgekühlt und durch eine Schlitzdüse extrudiert. Die aufschäumende Schmelze wurde ohne Kalibrierung über ein Rollenband abgezogen.

In Tabelle 1 ist der Einfluss unterschiedlicher Treibmittelkomponenten (T) bei gleicher Polymerzusammensetzung gezeigt.

**Tabelle 1**

| Beispiel Nr. | SAN (Luran 3380) | Talkum | CO₂ | Ethanol | Wasser | Dichte | Geschlossenzelligkeit * |
|---|---|---|---|---|---|---|---|
| | (phr) | (phr) | (phr) | (phr) | (phr) | (g/l) | (-) |
| V1 | 100 | 0.25 | 3.6 | - | | 180 | >95% |
| V2 | 100 | 0.25 | 5.0 | - | | 130 | >95% |
| B1 | 100 | 0.25 | 3.6 | 1.5 | | 57 | >95% |
| B2 | 100 | 0.25 | 3.6 | 2.0 | | 55 | >95% |
| B3 | 100 | 0.25 | 3.6 | 2.5 | | 52 | >95% |
| B4 | 100 | 0.25 | 5.0 | 2.5 | | 35 | >95% |
| V3 | 100 | 0.25 | 2.0 | | 2.0 | 35 | <80% |
| V4 | 100 | 0.25 | 4.0 | 1.0 | 1.0 | 30 | <20% |

| | | | | | | | |
|---|---|---|---|---|---|---|---|
| phr = Gewichtsanteile * gemessen nach DIN ISO 4590 | | | | | | | |

Die Vergleichsbeispiele V1 und V2 weisen hohe Dichten auf, die für Extrusionsschaumstoffe zum Einsatz in der Bauindustrie nicht akzeptabel sind. Zudem ist die Zellstruktur in V2 nicht vollständig homogen. Die Vergleichsbeispiele V3 und V4 zeigen aufgrund der geringen Werte für die Geschlossenzelligkeit keine befriedigenden Isolationseigenschaften.

In Tabelle 2 sind erfindungsgemäße Extrusionsschaumstoffe (B3 - B6) gezeigt, bei denen SAN unterschiedlicher Molekulargewichte eingesetzt werden.

**Tabelle 2 SAN unterschiedlicher Molekulargewichte mit CO₂ + Ethanol**

| Bsp. Nr. | SAN | | Talkum | CO₂ | Ethanol | Dichte | Geschlossenzelligkeit * |
|---|---|---|---|---|---|---|---|
| | Typ | (phr) | (phr) | (phr) | (phr) | (g/l) | (-) |
| B5 | Luran 3360 | 100 | 0.25 | 3.6 | 2.0 | 55 | >95% |
| B6 | Luran 3380 | 100 | 0.25 | 3.6 | 2.0 | 55 | >95% |
| B7 | Luran 33100 | 100 | 0.25 | 3.6 | 2.0 | 60 | >95% |
| B8 | Luran 2580 | 100 | 0.25 | 3.6 | 2.0 | 55 | >95% |

| | | | | | | | |
|---|---|---|---|---|---|---|---|
| * gemessen nach DIN ISO 4590 | | | | | | | |

In Tabelle 3 wird die Geschlossenzelligkeit des Beispiels B7 mit der des Vergleichsbeispiels V5 verglichen.

**Tabelle 3 SAN mit CO₂ + Ethanol, Zusatz von Polystyrol (PS)**

| | SAN (Luran 3380) | PS (PS 158K) | Talkum (Lucenac Pharma) | CO₂ | Ethanol | Dichte | Geschlossenzelligkeit * |
|---|---|---|---|---|---|---|---|
| | (phr) | (phr) | (phr) | (phr) | (phr) | (g/l) | (-) |
| B9 | 100 | 0 | 0.25 | 3.6 | 2 | 55 | >95% |
| V5 | 80 | 20 | 0.25 | 3.6 | 2 | 50 | <70% |

| | | | | | | | |
|---|---|---|---|---|---|---|---|
| * gemessen nach DIN ISO 4590 | | | | | | | |

Der Zusatz von Polystyrol bringt zwar leichte Vorteile bei der Dichte, vermindert aber die Geschlossenzelligkeit in nicht akzeptabler Weise.

In Tabelle 4 wird gezeigt, dass erfindungsgemäße Extrusionsschäume mit gängigen Flammschutzmitteln kompatibel sind.

**Tabelle 4 SAN mit unterschiedlichen Flammschutzmitteln (HBCD, TBBPA)**

| | SAN (Luran 3380) | HBCD *** | TBBPA** | Dicumyl | Talkum | CO₂ | Ethanol | Dichte | Brandprüfung (in Anlehnung an B2-Test, DIN 4102) |
|---|---|---|---|---|---|---|---|---|---|
| | | | | (phr) | | | | | |
| | (phr) | (phr) | | | (phr) | (phr) | (phr) | (g/l) | (-) |
| B2 | 100 | | | | 0.25 | 3.6 | 2.0 | 55 | nicht bestanden |
| B10 | 100 | 2.0 | | 0.25 | 0.25 | 3.6 | 2.0 | 55 | bestanden |
| B11 | 100 | | 4.0 | | 0.25 | 3.6 | 2.0 | 55 | bestanden |

| | | | | | | | | | |
|---|---|---|---|---|---|---|---|---|---|
| * Tetrabrombisphenol A *** Hexabromcyclododecan | | | | | | | | | |

In Tabelle 5 ist der Einfluss unterschiedlicher Treibmittelkomponenten T, speziell Aceton, und unterschiedlicher Treibmittelkonzentrationen bei gleicher Polymerzusammensetzung gezeigt.

**Tabelle 5**

| Beispiel Nr. | SAN (Luran 3380) | Talkum | CO₂ | Ethanol | Aceton | Dichte | Geschlossenzelligkeit * |
|---|---|---|---|---|---|---|---|
| | (phr) | (phr) | (phr) | (phr) | (phr) | (g/l) | (-) |
| B1 | 100 | 0.25 | 3.6 | 1.5 | | 57 | > 95% |
| B12 | 100 | 0.25 | 3.6 | 0.75 | 0.75 | 48 | > 95% |
| B13 | 100 | 0.25 | 3.6 | 0.38 | 1.12 | 53 | > 95% |
| B14 | 100 | 0.25 | 3.6 | | 1.5 | 60 | > 95% |
| B15 | 100 | 0.25 | 3.6 | | 3.0 | 55 | > 95% |

| | | | | | | | |
|---|---|---|---|---|---|---|---|
| * nach DIN ISO 4590 | | | | | | | |

Die Vergleichsbeispiele B12 bis B15 zeigen, dass Aceton analog zu Ethanol als geeignetes Co-Treibmittel eingesetzt werden kann.

In Tabelle 6 ist der Einfluss unterschiedlicher Treibmittelkomponenten (T), speziell Methylformiat, und unterschiedlicher Treibmittelkonzentrationen bei gleicher Polymerzusammensetzung gezeigt.

**Tabelle 6**

| Beispiel Nr. | SAN (Luran 3380) | Talkum | CO₂ | Ethanol | Methylformiat | Dichte | Geschlossenzelligkeit * |
|---|---|---|---|---|---|---|---|
| | (phr) | (phr) | (phr) | (phr) | (phr) | (g/l) | (-) |
| B1 | 100 | 0.25 | 3.6 | 1.5 | | 57 | > 95% |
| B16 | 100 | 0.25 | 3.6 | 0.75 | 0.75 | 55 | > 95% |
| B17 | 100 | 0.25 | 3.6 | | 1.5 | 53 | > 95% |

| | | | | | | | |
|---|---|---|---|---|---|---|---|
| * nach DIN ISO 4590 | | | | | | | |

Die Vergleichsbeispiele B16 und B17 zeigen, dass Methylformiat analog zu Ethanol als geeignetes Co-Treibmittel eingesetzt werden kann.

## Patentansprüche

1. Geschlossenzelliger Extrusionsschaumstoff mit einer Dichte im Bereich von 20 bis 150 g/l und einer Zellzahl im Bereich von 1 bis 30 Zellen pro mm, erhältlich durch
(a) Erhitzen einer Polymerkomponente (P), die gebildet ist aus
P1) 80 bis 100 Gew.-% (bezogen auf P) von einem oder mehreren Styrol-Acrylnitril-Copolymeren (SAN), enthaltend
a1) 18 bis 40 Gew.-% (bezogen auf SAN) einpolymerisiertes Acrylnitril,
a2) 60 bis 82 Gew.-% (bezogen auf SAN) einpolymerisiertes Styrol, und
a3) 0 bis 22 Gew.-% (bezogen auf SAN) mindestens eines einpolymerisierten Monomers aus der Gruppe bestehend aus Alkyl-(meth)acrylaten, (Meth)acrylsäure Maleinsäureanhydrid und Maleinimiden,
P2) 0 bis 20 Gew.-% (bezogen auf P) von einem oder mehreren thermoplastischen Polymeren aus der Gruppe bestehend aus Styrolcopolymeren, Polyolefinen, Polyacrylaten, Polycarbonaten (PC), Polyestern, Polyamiden, Polyethersulfonen (PES), Polyetherketonen (PEK) und Polyethersulfiden,
zur Ausbildung einer Polymerschmelze,
(b) Einbringen von 1 bis 12 Gew.-% (bezogen auf P) einer Treibmittelkomponente (T), die weniger als 0,2 Gew.-% Wasser (bezogen auf P) enthält, enthaltend
b1) 15 bis 95 Gew.-% (bezogen auf T) Kohlendioxid und
b2) 5 bis 85 Gew.-% (bezogen auf T) eines oder mehrerer Co-Treibmittel ausgewählt aus der Gruppe bestehend aus C₁-C₄ Alkoholen und C₁-C₄ Carbonylverbindungen,
in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum,
(d) gegebenenfalls Zugabe von Additiven zu der Polymerkomponente in mindestens einem der Schritte a), b) und/oder c).

2. Extrusionsschaumstoff gemäß Anspruch 1, wobei 1 bis 8 Gew.-% der Treibmittelkomponente (T), enthaltend
b1) 15 bis 95 Gew.-% (bezogen auf T) Kohlendioxid und
b2) 5 bis 85 Gew.-% (bezogen auf T) eines oder mehrerer Co-Treibmittel ausgewählt aus der Gruppe bestehend aus C₁-C₄ Alkoholen, C₃-C₄ Ketonen und C₂-C₄ Estern,
eingesetzt werden.

3. Extrusionsschaumstoff gemäß Anspruch 1 oder 2, **dadurch gekennzeichnet, dass** die Polymerkomponente (P) ausschließlich aus der Komponente (P1) besteht.

4. Extrusionsschaumstoff gemäß einem der Ansprüche 1 bis 3, **dadurch gekennzeichnet, dass** die Polymerkomponente (P) als Monomere ausschließlich Acrylnitril und Styrol enthält.

5. Extrusionsschaumstoff gemäß einem der Ansprüche 1 bis 4, **dadurch gekennzeichnet, dass** als Treibmittelkomponente (T) ein Gemisch aus Kohlendioxid und Ethanol eingesetzt wird.

6. Extrusionsschaumstoff gemäß einem der Ansprüche 1 bis 4, **dadurch gekennzeichnet, dass** als Treibmittelkomponente (T) ein Gemisch aus Kohlendioxid und Aceton eingesetzt wird.

7. Extrusionsschaumstoff gemäß einem der Ansprüche 1 bis 4, **dadurch gekennzeichnet, dass** als Treibmittelkomponente (T) ein Gemisch aus Kohlendioxid und Methylformiat eingesetzt wird.

8. Extrusionsschaumstoff gemäß einem der Ansprüche 1 bis 4, **dadurch gekennzeichnet, dass** als Treibmittelkomponente (T) ein Gemisch aus Kohlendioxid, Aceton und Ethanol eingesetzt wird.

9. Extrusionsschaumstoff gemäß einem der Ansprüche 1 bis 5, **dadurch gekennzeichnet, dass** der Gesamtanteil der Treibmittelkomponente (T) aus Kohlendioxid und Ethanol besteht und maximal 8 Gew.-% (bezogen auf P) beträgt, wobei der Anteil von Kohlendioxid max. 6 Gew.-% und der Anteil Ethanol maximal 5 Gew.-% ist.

10. Extrusionsschaumstoff gemäß Anspruch 6, **dadurch gekennzeichnet, dass** der Gesamtanteil der Treibmittelkomponente (T) aus Kohlendioxid und Aceton besteht und maximal 8 Gew.-% (bezogen auf P) beträgt, wobei der Anteil von Kohlendioxid maximal 6 Gew.-% und der Anteil Aceton maximal 5 Gew.-% ist.

11. Extrusionsschaumstoff gemäß Anspruch 8, **dadurch gekennzeichnet, dass** der Gesamtanteil der Treibmittelkomponente (T) aus Kohlendioxid, Aceton und Ethanol besteht und maximal 8 Gew.-% (bezogen auf P) beträgt, wobei der Anteil von Kohlendioxid maximal 6 Gew.-% und der Anteil der Mischung aus Aceton und Ethanol maximal 5 Gew.-% ist.

12. Extrusionsschaumstoff gemäß Anspruch 11, **dadurch gekennzeichnet, dass** der Anteil von Aceton mindestens 50 Gew.-% (bezogen auf die Aceton/Ethanol-Mischung) beträgt.

13. Verfahren zur Herstellung eines Extrusionsschaumstoffs mit einer Dichte im Bereich von 20 bis 150 g/l, einer Zellzahl im Bereich von 1 bis 30 Zellen pro mm durch
(a) Erhitzen einer Polymerkomponente (P), die gebildet ist aus
P1) 80 bis 100 Gew.-% (bezogen auf P) von einem oder mehreren Styrol-Acrylnitril-Copolymeren (SAN), enthaltend
a1) 18 bis 40 Gew.-% (bezogen auf SAN) einpolymerisiertes Acrylnitril,
a2) 60 bis 82 Gew.-% (bezogen auf SAN) einpolymerisiertes Styrol, und
a3) 0 bis 22 Gew.-% (bezogen auf SAN) mindestens eines einpolymerisierten Monomers aus der Gruppe bestehend aus Alkyl-(meth)acrylaten, (Meth)acrylsäure Maleinsäureanhydrid und Maleinimiden,
P2) 0 bis 20 Gew.-% (bezogen auf P) von einem oder mehreren thermoplastischen Polymeren aus der Gruppe bestehend aus Styrolcopolymeren, Polyolefinen, Polyacrylaten, Polycarbonaten (PC), Polyestern, Polyamiden, Polyethersulfonen (PES), Polyetherketonen (PEK) und Polyethersulfiden,
zur Ausbildung einer Polymerschmelze,
(b) Einbringen von 1 bis 12 Gew.-% (bezogen auf P) einer Treibmittelkomponente (T), die weniger als 0,2 Gew.-% Wasser (bezogen auf P) enthält, enthaltend
b1) 15 bis 95 Gew.-% (bezogen auf T) Kohlendioxid und
b2) 5 bis 85 Gew.-% (bezogen auf T) eines oder mehrerer Co-Treibmittel ausgewählt aus der Gruppe bestehend aus C₁-C₄ Alkoholen und C₁-C₄ Carbonylverbindungen,
in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum,
(d) gegebenenfalls Zugabe von Additiven zu der Polymerkomponente (P) in mindestens einem der Schritte a), b) und/oder c).

14. Verfahren gemäß Anspruch 13, **dadurch gekennzeichnet, dass** die Polymerkomponente (P) nur aus der Komponente (P1) besteht.

15. Verfahren gemäß einem der Ansprüche 13 oder 14, **dadurch gekennzeichnet, dass** die Polymerkomponente (P) als Monomere ausschließlich Acrylnitril und Styrol enthält.

16. Verfahren gemäß einem der Ansprüche 13 bis 15, **dadurch gekennzeichnet, dass** als Treibmittelkomponente T ein Gemisch aus Kohlendioxid und Ethanol eingesetzt wird.

17. Verfahren gemäß einem der Ansprüche 13 bis 16, **dadurch gekennzeichnet, dass** als Treibmittelkomponente (T) ein Gemisch aus Kohlendioxid und Aceton eingesetzt wird.

18. Verwendung des Extrusionsschaumstoffs gemäß einem der Ansprüche 1 bis 12 als Isoliermaterial.

19. Verwendung des Extrusionsschaumstoffs gemäß einem der Ansprüche 1 bis 12 als Strukturschaum.

## Claims

1. A closed-cell extruded foam with density in the range from 20 to 150 g/l and with a cell number in the range from 1 to 30 cells per mm, obtainable via
(a) heating of a polymer component (P), formed from
P1) from 80 to 100% by weight (based on P) of one or more styrene-acrylonitrile copolymers (SAN), comprising
a1) from 18 to 40% by weight (based on SAN) of copolymerized acrylonitrile,
a2) from 60 to 82% by weight (based on SAN) of copolymerized styrene, and
a3) from 0 to 22% by weight (based on SAN) of at least one copolymerized monomer from the group consisting of alkyl (meth)acrylates, (meth)acrylic acid, maleic anhydride and maleimides,
P2) from 0 to 20% by weight (based on P) of one or more thermoplastic polymers from the group consisting of styrene copolymers, polyolefins, polyacrylates, polycarbonates (PC), polyesters, polyamides, polyether sulfones (PES), polyether ketones (PEK), and polyether sulfides, to form a polymer melt,
(b) introduction of from 1 to 12% by weight (based on P) of a blowing agent component (T), which comprises less than 0.2% by weight of water (based on P), comprising
b1) from 15 to 95% by weight (based on T) of carbon dioxide and
b2) from 5 to 85% by weight (based on T) of one or more co-blowing agents selected from the group consisting of C₁-C₄ alcohols and C₁-C₄ carbonyl compounds,
into the polymer melt to form a foamable melt,
(c) extrusion of the foamable melt into a region of relatively low pressure, with foaming to give the extruded foam,
(d) if appropriate, addition of additives to the polymer component in at least one of the steps a), b) and/or c).

2. The extruded foam according to claim 1, using from 1 to 8% by weight of blowing agent component (T), comprising
b1) from 15 to 95% by weight (based on T) of carbon dioxide and
b2) from 5 to 85% by weight (based on T) of one or more co-blowing agents selected from the group consisting of C₁-C₄ alcohols, C₃-C₄ ketones, and C₂-C₄ esters.

3. The extruded foam according to claim 1 or 2, wherein polymer component (P) is composed exclusively of component (P1).

4. The extruded foam according to any of claims 1 to 3, wherein polymer component (P) comprises exclusively acrylonitrile and styrene as monomers.

5. The extruded foam according to any of claims 1 to 4, which uses, as blowing agent component (T), a mixture composed of carbon dioxide and ethanol.

6. The extruded foam according to any of claims 1 to 4, which uses, as blowing agent component (T), a mixture composed of carbon dioxide and acetone.

7. The extruded foam according to any of claims 1 to 4, which uses, as blowing agent component (T), a mixture composed of carbon dioxide and methyl formate.

8. The extruded foam according to any of claims 1 to 4, which uses, as blowing agent component (T), a mixture composed of carbon dioxide, acetone, and ethanol.

9. The extruded foam according to any of claims 1 to 5, wherein the total proportion of the blowing agent component (T) is at most 8% by weight (based on P) and is composed of carbon dioxide and ethanol, where the proportion of carbon dioxide is at most 6% by weight and the proportion of ethanol is at most 5% by weight.

10. The extruded foam according to claim 6, wherein the total proportion of the blowing agent component (T) is at most 8% by weight (based on P) and is composed of carbon dioxide and acetone, where the proportion of carbon dioxide is at most 6% by weight and the proportion of acetone is at most 5% by weight.

11. The extruded foam according to claim 8, wherein the total proportion of the blowing agent component (T) is at most 8% by weight (based on P) and is composed of carbon dioxide, acetone, and ethanol, where the proportion of carbon dioxide is at most 6% by weight and the proportion of the mixture composed of acetone and ethanol is at most 5% by weight.

12. The extruded foam according to claim 11, wherein the proportion of acetone is at least 50% by weight (based on the acetone/ethanol mixture).

13. A process for the production of an extruded foam with density in the range from 20 to 150 g/l, with a cell number in the range from 1 to 30 cells per mm via
(a) heating of a polymer component (P), formed from
P1) from 80 to 100% by weight (based on P) of one or more styrene-acrylonitrile copolymers (SAN), comprising
a1) from 18 to 40% by weight (based on SAN) of copolymerized acrylonitrile,
a2) from 60 to 82% by weight (based on SAN) of copolymerized styrene, and
a3) from 0 to 22% by weight (based on SAN) of at least one copolymerized monomer from the group consisting of alkyl (meth)acrylates, (meth)acrylic acid, maleic anhydride and maleimides,
P2) from 0 to 20% by weight (based on P) of one or more thermoplastic polymers from the group consisting of styrene copolymers, polyolefins, polyacrylates, polycarbonates (PC), polyesters, polyamides, polyether sulfones (PES), polyether ketones (PEK), and polyether sulfides,
to form a polymer melt,
(b) introduction of from 1 to 12% by weight (based on P) of a blowing agent component (T), which comprises less than 0.2% by weight of water (based on P), comprising
b1) from 15 to 95% by weight (based on T) of carbon dioxide and
b2) from 5 to 85% by weight (based on T) of one or more co-blowing agents selected from the group consisting of C₁-C₄ alcohols and C₁-C₄ carbonyl compounds,
into the polymer melt to form a foamable melt,
(c) extrusion of the foamable melt into a region of relatively low pressure, with foaming to give the extruded foam,
(d) optionally addition of additives to the polymer component (P) in at least one of the steps a), b) and/or c).

14. The process according to claim 13, wherein polymer component (P) is composed only of component (P1).

15. The process according to either of claims 13 and 14, wherein polymer component (P) comprises exclusively acrylonitrile and styrene as monomers.

16. The process according to any of claims 13 to 15, which uses, as blowing agent component T, a mixture composed of carbon dioxide and ethanol.

17. The process according to any of claims 13 to 16, which uses, as blowing agent component (T), a mixture composed of carbon dioxide and acetone.

18. The use of the extruded foam according to any of claims 1 to 12 as insulation material.

19. The use of the extruded foam according to any of claims 1 to 12 as structural foam.

## Revendications

1. Mousse extrudée à cellules fermées, ayant une densité dans la plage de 20 à 150 g/l et un nombre de cellules dans la plage de 1 à 30 cellules par mm, pouvant être obtenue par
(a) chauffage d'un composant polymère (P) qui est constitué de
P1) 80 à 100 % en poids (par rapport à P) d'un ou de plusieurs copolymères styrène-acrylonitrile (SAN), contenant
a1) 18 à 40 % en poids (par rapport au SAN) d'acrylonitrile incorporé par polymérisation,
a2) 60 à 82 % en poids (par rapport au SAN) de styrène incorporé par polymérisation, et
a3) 0 à 22 % en poids (par rapport au SAN) d'au moins un monomère incorporé par polymérisation, choisi dans le groupe constitué par les (méth)acrylates d'alkyle, l'acide (méth)acrylique, l'anhydride maléique et les maléimides,
P2) 0 à 20 % en poids (par rapport à P) d'un ou de plusieurs polymères thermoplastiques choisis dans le groupe constitué par les copolymères de styrène, polyoléfines, polyacrylates, polycarbonates (PC), polyesters, polyamides, polyéthersulfones (PES), polyéthercétones (PEK) et polyéthersulfures,
pour la formation d'une masse fondue de polymère,
(b) introduction de 1 à 12 % en poids (par rapport à P) d'un composant agent porogène (T), qui contient moins de 0,2 % en poids d'eau (par rapport à P), contenant
b1) 15 à 95 % en poids (par rapport à T) de dioxyde de carbone et
b2) 5 à 85 % en poids (par rapport à T) d'un ou de plusieurs co-agent(s) porogène(s), choisi(s) dans le groupe constitué par des alcools en C₁-C₄ et des composés carbonyle en C₁-C₄,
dans la masse fondue de polymère pour la formation d'une masse fondue expansible,
(c) extrusion de la masse fondue expansible, dans une plage de pression relativement basse, avec moussage en la mousse extrudée,
(d) éventuellement addition d'additifs au composant polymère dans au moins l'une des étapes a), b) et/ou c).

2. Mousse extrudée selon la revendication 1, dans laquelle on utilise 1 à 8 % en poids du composant agent porogène (T), contenant
b1) 15 à 95 % en poids (par rapport à T) de dioxyde de carbone et
b2) 5 à 85 % en poids (par rapport à T) d'un ou de plusieurs co-agent (s) porogène(s), choisi (s) dans le groupe constitué par des alcools en C₁-C₄, des cétones en C₃-C₄ et des esters en C₂-C₄.

3. Mousse extrudée selon la revendication 1 ou 2, **caractérisée en ce que** le composant polymère (P) consiste exclusivement en le composant (P1).

4. Mousse extrudée selon l'une quelconque des revendications 1 à 3, **caractérisée en ce que** le composant polymère (P) contient comme monomères exclusivement de l'acrylonitrile et du styrène.

5. Mousse extrudée selon l'une quelconque des revendications 1 à 4, **caractérisée en ce qu'**on utilise comme composant agent porogène (T) un mélange de dioxyde de carbone et éthanol.

6. Mousse extrudée selon l'une quelconque des revendications 1 à 4, **caractérisée en ce qu'**on utilise comme composant agent porogène (T) un mélange de dioxyde de carbone et acétone.

7. Mousse extrudée selon l'une quelconque des revendications 1 à 4, **caractérisée en ce qu'**on utilise comme composant agent porogène (T) un mélange de dioxyde de carbone et formiate de méthyle.

8. Mousse extrudée selon l'une quelconque des revendications 1 à 4, **caractérisée en ce qu'**on utilise comme composant agent porogène (T) un mélange de dioxyde de carbone, acétone et éthanol.

9. Mousse extrudée selon l'une quelconque des revendications 1 à 5, **caractérisée en ce que** la quantité totale du composant agent porogène (T) consiste en dioxyde de carbone et éthanol et vaut au maximum 8 % en poids (par rapport à P), la proportion de dioxyde de carbone étant au maximum de 6 % en poids et la proportion d'éthanol étant au maximum de 5 % en poids.

10. Mousse extrudée selon la revendication 6, **caractérisée en ce que** la quantité totale du composant agent porogène (T) consiste en dioxyde de carbone et acétone et vaut au maximum 8 % en poids (par rapport à P), la proportion de dioxyde de carbone étant au maximum de 6 % en poids et la proportion d'acétone étant au maximum de 5 % en poids.

11. Mousse extrudée selon la revendication 8, **caractérisée en ce que** la quantité totale du composant agent porogène (T) consiste en dioxyde de carbone, acétone et éthanol et vaut au maximum 8 % en poids (par rapport à P), la proportion de dioxyde de carbone étant au maximum de 6 % en poids et la proportion du mélange d'acétone et d'éthanol étant au maximum de 5 % en poids.

12. Mousse extrudée selon la revendication 11, **caractérisée en ce que** la proportion d'acétone est d'au moins 50 % en poids (par rapport au mélange acétone/ éthanol).

13. Procédé pour la production d'une mousse extrudée ayant une densité dans la plage de 20 à 150 g/l, un nombre de cellules dans la plage de 1 à 30 cellules par mm, par
(a) chauffage d'un composant polymère (P) qui est constitué de
P1) 80 à 100 % en poids (par rapport à P) d'un ou de plusieurs copolymères styrène-acrylonitrile (SAN), contenant
a1) 18 à 40 % en poids (par rapport au SAN) d'acrylonitrile incorporé par polymérisation,
a2) 60 à 82 % en poids (par rapport au SAN) de styrène incorporé par polymérisation, et
a3) 0 à 22 % en poids (par rapport au SAN) d'au moins un monomère incorporé par polymérisation, choisi dans le groupe constitué par les (méth)acrylates d'alkyle, l'acide (méth)acrylique, l'anhydride maléique et les maléimides,
P2) 0 à 20 % en poids (par rapport à P) d'un ou de plusieurs polymères thermoplastiques choisis dans le groupe constitué par les copolymères de styrène, polyoléfines, polyacrylates, polycarbonates (PC), polyesters, polyamides, polyéthersulfones (PES), polyéthercétones (PEK) et polyéthersulfures,
pour la formation d'une masse fondue de polymère,
(b) introduction de 1 à 12 % en poids (par rapport à P) d'un composant agent porogène (T) qui contient moins de 0,2 % en poids d'eau (par rapport à P), contenant
b1) 15 à 95 % en poids (par rapport à T) de dioxyde de carbone et
b2) 5 à 85 % en poids (par rapport à T) d'un ou de plusieurs co-agent(s) porogène(s), choisi(s) dans le groupe constitué par des alcools en C₁-C₄ et des composés carbonyle en C₁-C₄,
dans la masse fondue de polymère pour la formation d'une masse fondue expansible,
(c) extrusion de la masse fondue expansible, dans une plage de pression relativement basse, avec moussage en la mousse extrudée,
(d) éventuellement addition d'additifs au composant polymère (P) dans au moins l'une des étapes a), b) et/ou c).

14. Procédé selon la revendication 13, **caractérisé en ce que** le composant polymère (P) consiste seulement en le composant (P1).

15. Procédé selon l'une quelconque des revendications 13 et 14, **caractérisé en ce que** le composant polymère (P) contient comme monomères exclusivement de l'acrylonitrile et du styrène.

16. Procédé selon l'une quelconque des revendications 13 à 15, **caractérisé en ce qu'**on utilise comme composant agent porogène T un mélange de dioxyde de carbone et éthanol.

17. Procédé selon l'une quelconque des revendications 13 à 16, **caractérisé en ce qu'**on utilise comme composant agent porogène (T) un mélange de dioxyde de carbone et acétone.

18. Utilisation de la mousse extrudée selon l'une quelconque des revendications 1 à 12, en tant que matériau isolant.

19. Utilisation de la mousse extrudée selon l'une quelconque des revendications 1 à 12, en tant que mousse structurelle.
